(19)

Europäisches Patentamt
European Patent Office
Office européen des brevets

(11) **EP 2 522 708 A2**

(12) **EUROPEAN PATENT APPLICATION**

(43) Date of publication:
**14.11.2012 Bulletin 2012/46**

(51) Int Cl.:
***C10J 3/36*** (2006.01)  ***C10J 3/80*** (2006.01)
***C10J 3/58*** (2006.01)

(21) Application number: **12165742.3**

(22) Date of filing: **26.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.05.2011 GB 201107855**

(71) Applicant: **Anglia Ruskin University**
**Chelmsford, Essex CM1 1SQ (GB)**

(72) Inventor: **Shirvani, Hassan**
**Cambridge, Cambridgeshire CB2 3NH (GB)**

(74) Representative: **Martin, Philip John et al**
**Marks & Clerk LLP**
**62-68 Hills Road**
**Cambridge**
**CB2 1LA (GB)**

(54) **Gasifier**

(57) We describe a biomass gasifier, comprising three connected chambers, an upper biomass drying chamber, a lower biomass combustion chamber, and an intermediate biomass gasification chamber, the gasifier further comprising: a system to release dry biomass from said drying chamber into said gasification chamber; a system to release gasified biomass from said gasification chamber into said combustion chamber; a product gas outlet coupled to said gasification chamber to provide product gas from gasifying said biomass; and exhaust gas communication means to communicate exhaust gas from said combustion chamber to first said gasification chamber and then said drying chamber. Embodiments of the apparatus are self-sustaining, even when used with wet biomass.

Figure 3

**EP 2 522 708 A2**

**Description**

FIELD OF THE INVENTION

This invention relates to apparatus and a method for gasifying biomass. The apparatus and method presented are preferably self-sustaining, and are particularly useful for gasifying wet biomass.

BACKGROUND TO THE INVENTION

Biomass is an extremely useful renewable energy source which, once converted, can be used to either generate electricity or produce heat. There are a number of technological options for converting biomass into a useable renewable energy source, including the use of a thermal conversion process such as gasification.

Gasification is a process that converts carbonaceous materials into carbon monoxide and hydrogen comprising heating the material at high temperatures with a controlled amount of oxygen and/or steam. In a conventional gasifier the carbonaceous material undergoes several different processes including: pyrolysis, combustion, gasification and a reversible water gas shift reaction. The resulting gas mixture is called syngas and is itself a fuel. Additionally the high temperature combustion refines out solid materials including corrosive ash elements such as chloride and potassium, allowing clean gas production.

When used with biomass, gasification produces a syngas which can then be combusted to provide a renewable energy source. This is particularly true since the gasification of biomass and combustion of the produced gas removes the same amount of carbon dioxide from the atmosphere as is emitted from gasification and combustion. The impact on the environment is therefore low as the carbon contained in the biomass is still within the carbon cycle. There is, however, still a need to find a self-sustaining biomass gasifier where the energy contained in the biomass is used to operate the gasifier itself.

Additionally since biomass has a lower net calorific value than coal due to its typically high moisture content, conventional methods of biomass gasification use dry biomass with a moisture content of less than 10% water w/w. However, the majority of biomass produced often has a moisture content of more than 10% water w/w. This means that in conventional methods, the biomass is typically dried prior to being introduced into the gasifier. This is, however, both time-consuming and inefficient.

SUMMARY OF THE INVENTION

According to a first aspect of the invention there is therefore provided a biomass gasifier, comprising three connected chambers, an upper biomass drying chamber, a lower biomass combustion chamber, and an intermediate biomass gasification chamber, the gasifier further comprising a system to release dry biomass from said drying chamber into said gasification chamber; a system to release gasified biomass from said gasification chamber into said combustion chamber; a product gas outlet coupled to said gasification chamber to provide product gas from gasifying said biomass; exhaust gas communication means to communicate exhaust gas from said combustion chamber and first said gasification chamber and then said drying chamber inlet.

A significant advantage of embodiments of the invention is that the apparatus may be loaded with wet biomass, for example in a domestic context, wet compost. Furthermore, preferred embodiments of the apparatus are self-sustaining, that is the heat produced by combustion of the end product of the gasification is sufficient to sustain the gasifying process. In embodiments the exhaust gas from the combustion and the product gas from the gasification may together be used to dry the biomass in the drying chamber. Embodiments of the gasifier are able to operate in a self-sustaining mode even with biomass containing greater than 50% w/w water.

In some preferred embodiments the three chambers are arranged one above another separated by two partitions, one between the drying and gasification chambers, and one between the gasification and combustion chambers. In embodiments one or both these comprises means for the exhaust gas from the combustion to flow upwards, in particular from the combustion chamber to the gasification chamber, and then from the gasification chamber to the drying chamber. Thus in embodiments one or both of the partitions between the chambers is provided with a set of ducts or pipes carrying the exhaust gas, in embodiments in the manner of a 'sieve'. However although a duct is generally vertical, preferably the openings at either end of a duct are laterally offset from one another, for example via a dogleg, to inhibit material from falling directly from a higher chamber into a lower chamber. With such an arrangement the system to release dry biomass and/or gasified biomass into the respective chambers beneath may comprise means to align the ends of the ducts, for example by shifting one portion of a set of ducts laterally. Additionally or alternatively, however, a system to release dry/gasified biomass may comprise some other form of controllable door, window or opening.

In addition to the above mentioned conduits for exhaust gas to flow upwards through the apparatus from the lower, combustion chamber through the gasification chamber and up through the drying chamber, the apparatus preferably also comprises exhaust gas ducting external to the chambers at one or a plurality of locations around the perimeter or circumference of the apparatus. This additional ducting may provide an external path for exhaust gas from the combustion chamber into the gasification and/or the drying chamber.

Preferred embodiments of the apparatus also recapture heat from the product gas to assist in drying the biomass in the drying chamber. Thus preferred embodiments include a product gas heat exchanger thermally coupled to the drying chamber through which the product gas flows from the gasification chamber to the product gas outlet. The heat exchanger may comprise, for example, a pipe or pipes wrapped around the drying chamber and/or a set of pipes or gas channels running through the drying chamber up to a product gas manifold coupled to the product gas outlet.

In some preferred embodiments the gasifier also includes an air inlet heat exchanger to preheat air for the combustion chamber. In embodiments the combustion chamber has an air inlet, preferably regulated in order to be able to control the oxygen flow to the combustion chamber, and hence to control the burn rate/temperature in this chamber. The regulation of the air inlet may be manual or by means of an electronic control valve, for example controlled dependent on a sensed temperature of the combustion chamber. A heat exchanger to preheat the air through the air inlet is optional but assists in achieving self-sustaining operation. This heat exchanger may recover heat from the exhaust gas, for example by coupling the heat exchanger to an external exhaust gas conduit from the combustion chamber and/or from the product gas, for example by routing the product gas through the heat exchanger and thence to the product gas outlet.

Embodiments of the apparatus also include means to remove the ash produced by the combustion process. In embodiments this may be a suction-driven mechanism to remove ash from beneath a grate, in embodiments driven by convection within the apparatus itself (self-driven). This has the advantage that ash may be removed without opening up the apparatus, although in embodiments a mechanical means for removing the ash may also be provided.

In embodiments the chambers are formed by partitions within a single outer envelope or can. This results in a very compact design, for example around 2m in height for 4kW output.

However in some alternative approaches the chambers comprise modular assemblies which can be attached to/detached from one another. This facilitates manufacture and maintenance.

Thus an aspect of the invention also provides a module of a gasifier as described above.

The apparatus is scalable from a few kilowatts in size for domestic use up to, potentially, tens of megawatts for industrial use. Embodiments of the apparatus may be employed to provide combined heat and (electrical) power (heat may be extracted by one or more additional heat exchangers). Additionally embodiments can either be batch-fed or continuously fed, and can also be tied or not to other equipment used for energy generation.

As previously mentioned, one particularly advantage of the apparatus is that the biomass need not be dry. Thus embodiments of the apparatus may be used with biomass containing between 0% and 80% water weight-by-weight, for example greater than 50% w/w. Use of the product gas to heat the drying chamber is an important feature in this context. The apparatus may be used with a range of different types of biomass including, but not limited to, garden compost, waste from vegetable/potato processing units, surplus treated sewage cake, and paper/cardboard (although this latter is less preferable because of its lower energy content). As previously mentioned, embodiments of the apparatus are self-sustaining and the flow of exhaust gas is an important feature in achieving this.

According to a related aspect of the invention there is provided a method of gasifying biomass using a gasifier comprising three connected chambers, an upper biomass drying chamber, a lower biomass combustion chamber, and an intermediate biomass gasification chamber, the gasifier further comprising a product gas outlet coupled to said gasification chamber and an exhaust gas communication means to communicate exhaust gas from said combustion chamber to first said gasification chamber and then said drying chamber, the method comprising:

drying wet biomass in the drying chamber with at least the product gas provided by the product gas outlet;
allowing the dry biomass to pass from said drying chamber into said gasification chamber, in particular by controllable releasing of the biomass;
gasifying the dry biomass in the gasification chamber with the exhaust gas from said combustion chamber; and
allowing the gasified biomass to pass from said gasification chamber into said combustion chamber.

A significant advantage of this method of the invention is that it is used with wet biomass, i.e. biomass with a moisture content of at least 50% water w/w. Furthermore, preferred embodiments of the method are self-sustaining meaning that both the drying and gasification of the inputted biomass is carried out within the gasifier. The heat produced by combustion of the end product of the gasification is sufficient to sustain the gasifying process and, in embodiments the exhaust gas from the combustion and the product gas from the gasification may together be used to dry the biomass in the drying chamber.

In embodiments the gasifying comprises passing the exhaust gas through one or more sieves between the gasification chamber and the drying chamber, and between the combustion chamber and the gasification chamber. The sieve(s) may be controlled to allow the biomass to pass.

Thus in some preferred embodiments of the method the three chambers within the gasifier are arranged on top of one another such that the exhaust gas can flow from the combustion chamber upwards to the gasification chamber and then to the drying chamber. The flow of exhaust gas is facilitated by the exhaust gas communication means which in embodiments, comprises a first plurality of ducts between the combustion chamber and the gasification chamber, and a second plurality of ducts between the gasification chamber and the drying chamber. These pluralities of ducts are arranged in the manner of a sieve and although they are configured to convey the exhaust gas vertically, the openings at either end of a duct are laterally offset from one another to inhibit material from falling through the duct. Thus the releasing of dry/gasified biomass into the respective chambers may be via a system to align the openings at either end of a duct. Such a system could involve shifting one portion of a set of ducts laterally and/or comprise some other form of controllable door, window or opening. It will be appreciated that a skilled man would be readily able to provide a system that enables the openings at either end of a duct to be aligned.

Preferably the method includes pre-heating air via an air inlet heat exchanger, introducing the pre-heated air via an air inlet into the combustion chamber, and flowing one or both of the product gas and the exhaust gas through the air inlet heat exchanger to preheat air for the combustion chamber.

Thus in addition to the above mentioned conduits or channels provided in the gasifier for exhaust gas to flow upwards through the apparatus from the lower combustion chamber through the gasification chamber and up through the drying chamber, the method may also include the use of a gasifier which comprises exhaust gas ducting external to the chambers at one or a plurality of locations around the perimeter or circumference of the apparatus. This additional ducting may provide an external path for exhaust gas from the combustion chamber into the gasification and/or the drying chamber.

In embodiments the drying of the wet biomass is facilitated by at least (heat from) the product gas from the gasification chamber. The heat from the product gas being preferably recuperated and reused. This is achieved by the use of a gasifier which includes a product heat exchanger thermally coupled to the drying chamber through which the product gas flows from the gasification chamber to the product gas outlet. The product gas heat exchanger may comprise, for example, a pipe or pipes wrapped around the drying chamber and/or a set of pipes or gas channels running through the drying chamber up to a product gas manifold coupled to the product gas outlet.

In some preferred embodiments the method also includes combusting the gasified biomass which is released into the combustion chamber. This combustion process produces the exhaust gas which can then be used to gasify and optionally dry the biomass. Additionally the combustion process inevitably produces solid materials, such as ash. This ash is a waste product of the gasifier and can be removed from the combustion chamber by an ash removal system. Such an ash removal system may be mechanical and/or driven by operation of the gasifier (e.g. driven by convection from within the gasifier itself), or may be manual removal of the ash once the gasifier is no longer being operated. For example, the ash removal system may be a suction-driven mechanism to remove ash from beneath a grate.

Additionally the method may include pre-heating air via an air inlet heat exchanger for the combustion chamber. To avoid incomplete combustion, this pre-heated excess air is introduced via an air inlet to the combustion chamber. The pre-heated air is also preferably regulated to control the oxygen flow into the chamber and hence control the burn rate and/or temperature therein. The regulation of the air inlet may be manual or by means of an electronic control valve, e.g. controlled dependent on a sensed temperature of the combustion chamber.

The pre-heating of the air is preferably carried out by an air inlet exchanger in which one or both of the product gas and the exhaust gas flow through. It is an optional component of the method, but assists in achieving self-sustainability. Additionally the air inlet exchanger may recover heat from the exhaust gas, for example, by coupling the heat exchanger to an external exhaust gas conduit from the combustion chamber and/or from the product gas. This may be achieved, for example, by routing the product gas through the air inlet heat exchanger of the gasifier and thence to the product gas outlet.

In embodiments the gasifier used in the method comprises three connecting chambers which are formed by partitions within a single outer envelope or can. However in some alternative approaches the chambers comprise modular assemblies which can be attached to/detached from one another before use in the method. This modular assembly facilitates manufacture and maintenance. The method is also scalable so as to produce a few kilowatts of energy for domestic purposes up to, potentially, tens of megawatts for industrial purposes. Embodiments of the method may provide combined heat and (electrical) power (heat may be extracted by one or more additional heat exchangers). Additionally embodiments can either be a batch method or a continuous method of gasifying biomass. Regardless of whether the method is batch or continuous, the skilled man would be readily able to use the gasifier described herein in such a method. Finally the method may be carried out in conjunction with other equipment used for energy generation, e.g. a generator.

As previously mentioned, one particularly advantage of the method is that it can be used with wet biomass. Thus embodiments of the method can involve the use biomass containing between 0% and 80% water weight-by-weight, for example greater than 50% w/w. Use of the product gas to heat the drying chamber is an important feature of the method in this context. The method may involve a range of different types of biomass including, but not limited to, garden compost, waste from vegetable/potato processing units, surplus treated sewage cake, and paper/cardboard (although this latter is less preferable because of its lower energy content). As previously mentioned, embodiments of the method are self-sustaining and the flow of exhaust gas from the combustion chamber to the gasification chamber and finally to the drying chamber is an important feature in achieving this.

According to a further related aspect of the invention there is provided a gasifier comprising three connected chambers, an upper biomass drying chamber, a lower biomass combustion chamber, and an intermediate biomass gasification chamber, the gasifier further comprising a product gas outlet coupled to said gasification chamber and an exhaust gas communication means to communicate exhaust gas from said combustion chamber to first said gasification chamber and then said drying chamber, the gasifier further comprising: means for drying wet biomass in the drying chamber with at least the product gas provided by the product gas outlet; means for allowing the dry biomass to pass from said drying chamber into said gasification chamber; means for gasifying the dry biomass in the gasification chamber with the exhaust gas from said combustion chamber; and means for allowing the gasified biomass to pass from said gasification chamber into said combustion chamber.

Further advantages of the present invention include an extremely high efficiency value of up to 80%, multi-fuel capability, no requirement for after-cooling of the product gases, no condensable gases and/or tars in the product gases and low cost.

BRIEF DESCRIPTION OF THE DRAWINGS

These and other aspects of the invention will now be further described, by way of example only, with reference to the accompanying figures in which:

Figure 1 shows an embodiment of a biomass gasifier according to the invention;

Figure 2 shows an alternative embodiment of the biomass gasifier of Figure 1;

Figure 3 shows example heat flux through an embodiment of the biomass gasifier of Figure 1;

Figure 4 shows a cross-section through a set of ducts or pipes present in one or both of the partitions between the chambers of the gasifier of Figures 1 and 2 in the manner of a 'sieve';

Figure 5 shows a cross-section through a further embodiment of a biomass gasifier, showing the gas flow through the gasifier;

Figure 6 illustrates the results of a computational fluid dynamics (CFD) analysis carried out on an embodiment of a biomass gasifier of Figure 1 showing contours of static temperature within an embodiment of a biomass gasifier;

Figure 7 illustrates the results of a computational fluid dynamics (CFD) analysis carried out on an embodiment of a biomass gasifier of Figure 1 showing contours of velocity magnitude (m/s) within an embodiment of a biomass gasifier;

Figure 8 illustrates the results of a computational fluid dynamics (CFD) analysis carried out on an embodiment of a biomass gasifier of Figure 1 showing pathlines coloured by velocity magnitude (m/s) within an embodiment of a biomass gasifier;

Figure 9 illustrates the results of a computational fluid dynamics (CFD) analysis carried out on an embodiment of a biomass gasifier of Figure 1 showing contours of turbulent intensity (%) within an embodiment of a biomass gasifier;

Figure 10 illustrates the results of a computational fluid dynamics (CFD) analysis carried out on an embodiment of a biomass gasifier of Figure 1 showing contours of density ($kg/m^3$) within an embodiment of a biomass gasifier;

Figure 11 illustrates the results of a computational fluid dynamics (CFD) analysis carried out on an embodiment of a biomass gasifier of Figure 1 showing contours of mass fraction of $CO_2$ within an embodiment of a biomass gasifier;

Figure 12 illustrates the results of a computational fluid dynamics (CFD) analysis carried out on an embodiment of a biomass gasifier of Figure 1 showing contours of mass fraction of $O_2$ within an embodiment of a biomass gasifier; and

Figure 13 illustrates the results of a computational fluid dynamics (CFD) analysis carried out on an embodiment of a biomass gasifier of Figure 1 showing contours of mole fraction of $H_2O$ within an embodiment of a biomass gasifier.

DETAILED DESCRIPTION OF THE DRAWINGS

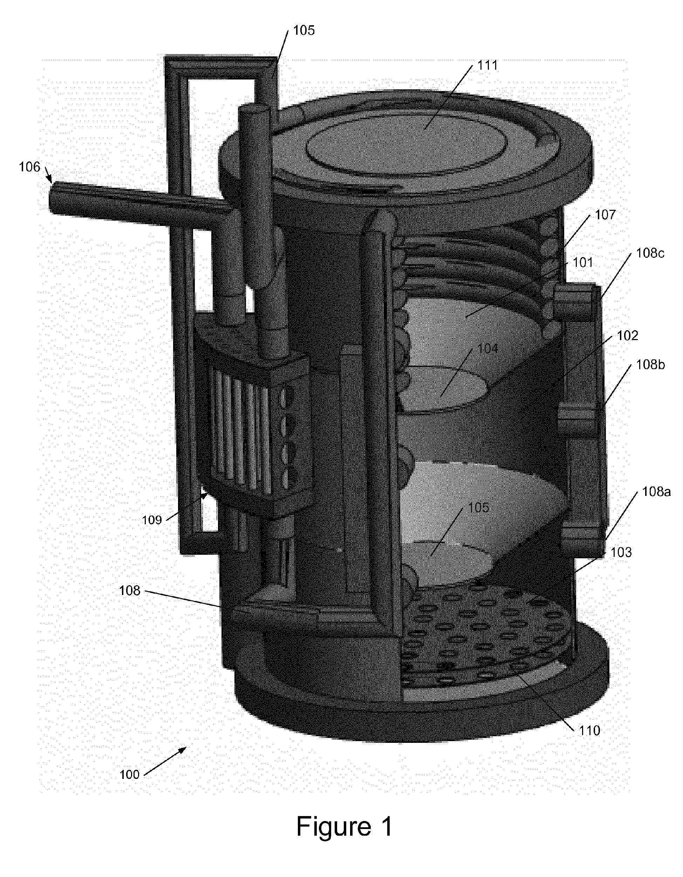

Referring first to Figure 1, this shows a biomass gasifier according to an embodiment of the invention.

The gasifier 100 comprises three interconnecting chambers, an upper drying chamber 101, an intermediate gasification chamber 102 and a lower combustion chamber 103. The gasifier shown further comprises a system 104, 105 to release both gasified and dry biomass from their respective chambers into the chamber below. The release system shown in this figure includes two offset partitions 104, 105 which operate in a sieve-type manner to inhibit material from falling directly from the drying chamber to the gasification chamber, and similarly from the gasification chamber to the combustion chamber.

There is also exhaust gas ducting 108a, 108b, 108c which provides an external path for the exhaust gas from the combustion chamber into the gasification and/or the drying chamber. Furthermore the gasifier 100 shown includes a product gas outlet 106 which allows recovery of the heat of the product gas from the drying chamber. This outlet is coupled to a product gas heat exchanger 107 which comprises a set of pipes wrapped around the drying chamber.

The gasifier also includes an air inlet heat exchanger 109 to preheat air (via an inlet tube (not shown)) for the combustion chamber. The exchanger shown receives both the product gas from the drying chamber via outlet 106, and the exhaust gas 108 from the gasification and drying chambers. An ash removal system 110 is also shown which relies on a suction-driven mechanism to remove ash from beneath a grate.

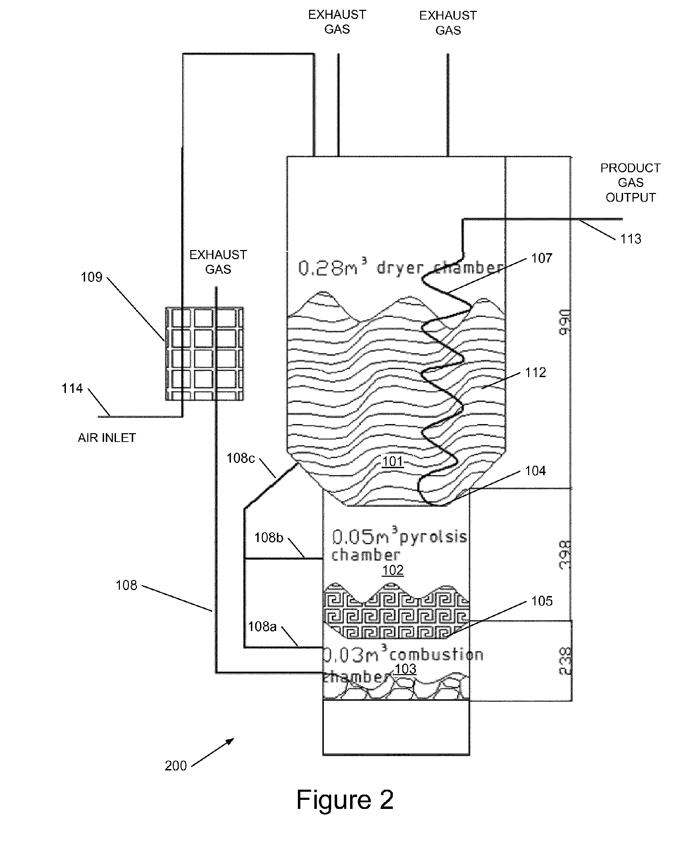

During operation of the gasifier shown in this embodiment, wet biomass is inputted into the drying chamber via opening means 110 (e.g. a hopper), this biomass is dried by both the exhaust gas produced by combustion in the lower combustion chamber 103 which flows via the gasification chamber 102 to the drying chamber 101, either internally or via the external ducting 108a, 108b, 108c and the hot product gas produced in the gasification chamber. Once dry the biomass is released via partition 104 to the gasification chamber where it is gasified. The gasifying process produces product gases which are transported via duct 105, heat exchanger 107 and outlet 106 in the drying chamber. The char produced by gasification is then released to the combustion chamber via partition 105 where it combusts to produce the hot exhaust gas and ash. This ash can be removed from the gasifier using removal system 110. Finally the remaining heat from the exhaust gas and product gas is recovered and reused via the air inlet heat exchanger 109 to preheat excess air. The preheated air is then injected into the combustion chamber via an air inlet 114 (see Figure 2) to ensure complete combustion of the gasified biomass is observed.

Figure 2 shows an alternative embodiment of the biomass gasifier 200 in which the product gas from the gasifying process does not pass through the air inlet heat exchanger. Like elements to those of Figure 1 are indicated by like reference numerals. The extra numbers along the right hand side of the gasifier (e.g. 238, 398 and 990) refer to the dimensions (in centimetres) of the gasifier, the gasifier shown in this figure is also 400 cm wide (dimension not shown).

Thus the gasifier 200 comprises three interconnecting chambers, an upper drying chamber 101, an intermediate gasification chamber 102 and a lower combustion chamber 103, with volumes of $0.28m^3$, $0.05m^3$ and $0.03m^3$ respectively. Once loaded in the upper drying chamber 101 the wet biomass 112 is dried by both the exhaust gas which flows internally from the combustion chamber 103 via the gasification chamber 102, and externally via the ducting 108a, 108b, 108c and the product gas from the gasification chamber.

The heat from the product gas is then recovered via the product gas heat exchanger 107 and the product gas removed from the gasifier via product gas output tube 113. The remaining heat from the exhaust gas is either lost via the wall of the upper drying chamber, or it is reused via air inlet heat exchanger 109. In the embodiment shown in this figure the air inlet heat exchanger 109 uses the heat from the exhaust gas 108 to preheat excess air which is then injected into the lower combustion chamber via air inlet 114.

Once dry the biomass is released via partition 104 in a sieve type manner to the gasification (pyrolysis) chamber 102 and gasified by the exhaust gas from the combustion chamber (either internally or externally via ducting 108a, 108b). Once the biomass has been gasified the resulting char is released via partition 105 to the combustion chamber 103. Here it undergoes combustion to produce the hot exhaust gas and ash which is removed via a removal system (not shown).

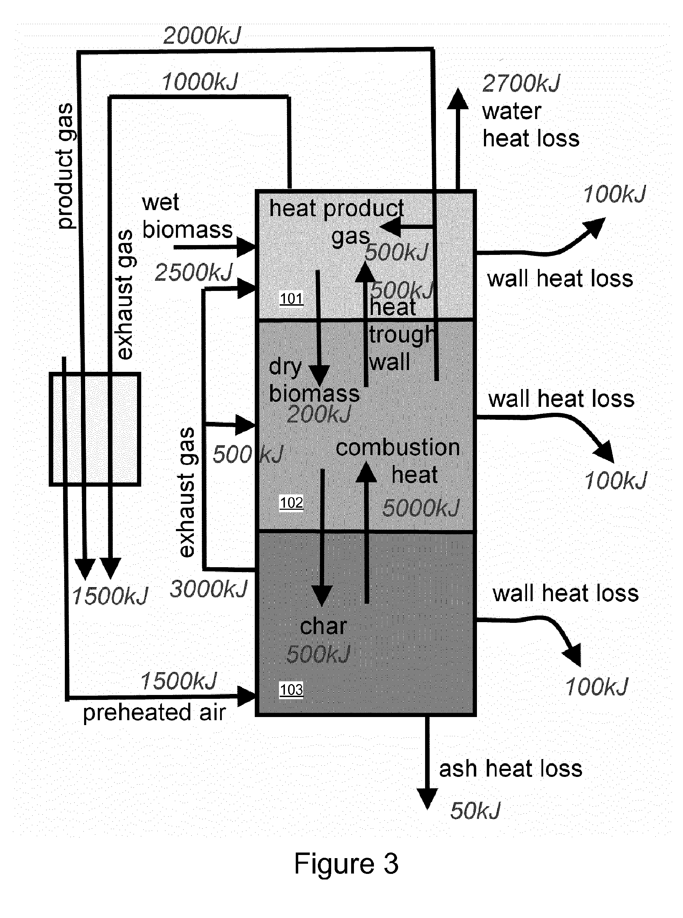

Figure 3 illustrates heat flux through an embodiment of the gasifier of the type of Figure 1 in use.

The biomass gasifier comprises three interconnecting chambers, an upper drying chamber 101, a lower combustion chamber 103 and an intermediate gasification chamber 102, each on top of one another. Wet biomass (e.g. wood chips) with a moisture content of approximately 30% w/w is inputted at a rate of 3.5kg/h into the upper chamber and dried by the product gas from the gasification chamber (500kJ), the exhaust gas which flows from the lower combustion chamber (3000kJ) to the intermediate gasification chamber (500kJ) and then to the drying chamber (2500kJ), and the heat (500kJ) from the partition between the drying and the gasification chambers.

Approximately 100kJ of energy is lost via the walls of the drying chamber, and 2700 kJ is lost via water evaporation from the wet biomass. The product gas (2000 kJ) and the exhaust gas (1000kJ) are then transported via a heat exchanger to heat the preheated air (1500kJ) at approximately 150°C for the lower combustion chamber and can be extracted to provide approximately 1500kJ of useable energy. This energy output provides a thermal power of Q=4kW.

Once dry, the dry biomass has a volatile content of approximately between 40 and 65% w/w and is released from the drying chamber into the gasification chamber (200kJ). In the gasification chamber the dry biomass is gasified by the exhaust gas (500kJ) and the combustion heat (5000kJ) from the lower combustion chamber at a gasification temperature of approximately 800°C. Approximately 100 kJ of energy is lost via the walls of the gasification chamber.

The solid products (char) from combustion (500kJ) are then released into the lower combustion chamber. Here they are heated in the excess preheated air (1500kJ) so that they combust and provide the heat for the gasification process and the dry process. Approximately 100kJ of energy is lost via the walls of the combustion chamber, and 50kJ is lost via the waste ash which is removed from the gasifier.

The energy condition that the gasifier should preferably satisfy to be self-sustaining is as follows:

*Char energy + Air preheat >Exhaust (Flue) gas energy+ Product gas energy*

Using the values cited above:

*500kJ + 1500kJ > 1500kJ*

Thus this condition is satisfied, demonstrating that this embodiment of the gasifier of the present invention is self-sustaining.

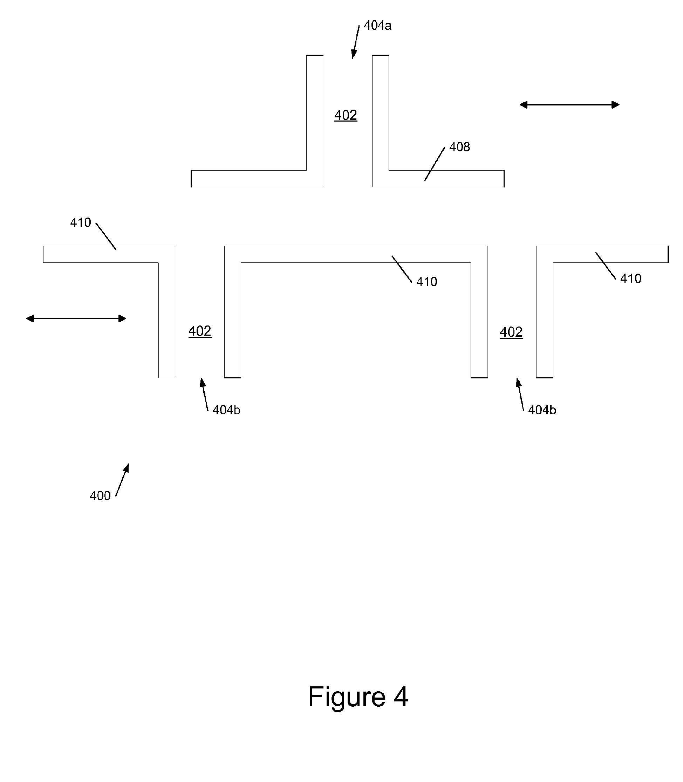

Figure 4 shows a cross-section through an embodiment of a system 400 within the gasifier (not explicitly shown in Figure 1) to release dry/gasified biomass from the drying chamber/gasification chamber into the respective chamber below. The embodiment shown is a set of ducts or pipes 402 which can be present in one or both of the partitions 104, 105 between the chambers. This set of pipes behave in the manner of a 'sieve' to both allow material to pass from one chamber to the chamber below, and inhibit material falling between chambers. The arrangement allows the user to control when material is released from one chamber to the next.

This figure shows how the pipes are generally vertical to allow the exhaust gas to flow from the combustion chamber, to the gasification chamber and then to the drying chamber. However, the openings 404a, 404b at either end of a pipe are laterally offset from one another. This means that for material to be released from an upper chamber to a lower chamber, the ends of the pipes must be aligned. This can be achieved either by moving the upper portion 408 of the set of pipes laterally to align the openings, or by moving the lower portion 410 of the set of pipes in a similar manner. This movement is shown in this figure by the double-headed arrows.

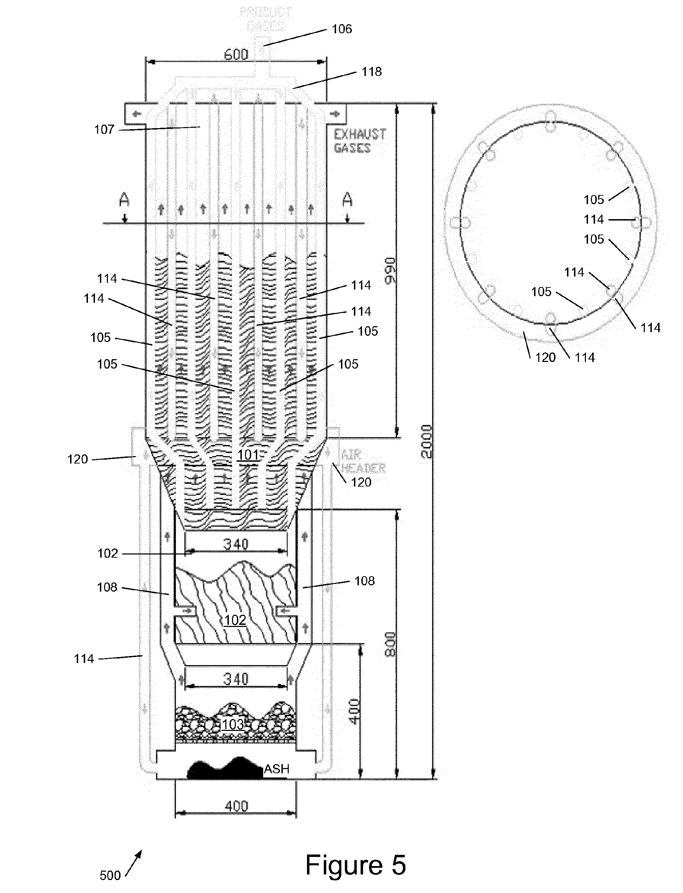

Figure 5 shows an alternative biomass gasifier 500. Again like elements to those of Figure 1 are indicated by like reference numerals. Additionally the extra numbers on this figure (400, 340, 400, 800, 2000, 600 and 990) relate to the dimensions (in centimetres) of the gasifier. It can therefore be seen that the entire apparatus stands at a compact height of 2m. The inset in Figure 5 is a horizontal cross-sectional view along line A-A. In this arrangement, the product gas heat exchanger comprises a set of ducts 105 running up adjacent drying chamber 101. These connect to an outlet manifold 118. The air inlet heat exchanger 109 comprises ducts 114 travelling down adjacent the drying chamber 101 to an air inlet manifold 120 for the combustion chamber.

It can also be seen from this figure that the exhaust gas 108 is produced by the combustion chamber 103 and flows via the gasification chamber 102 to the drying chamber 101 and out therefrom. The product gas is produced by the intermediate gasification chamber 102 and flows into the drying chamber via ducts 105. This allows a portion of the heat of the product gas to assist in drying the wet biomass located in the drying chamber. A portion of the product gas is also transported via product gas outlet 106. The ducts 114 of the air inlet heat exchanger allow the air to be preheated for use in the combustion chamber.

One or both of the product gas and exhaust gas which exit the gasifier can then be fed via an air inlet heat exchanger 109 to produce preheated air which is injected into the lower combustion chamber via air inlet 114. The flow of the hot gases provided by the gasifier therefore replicates a natural chimney draft type gas flow.

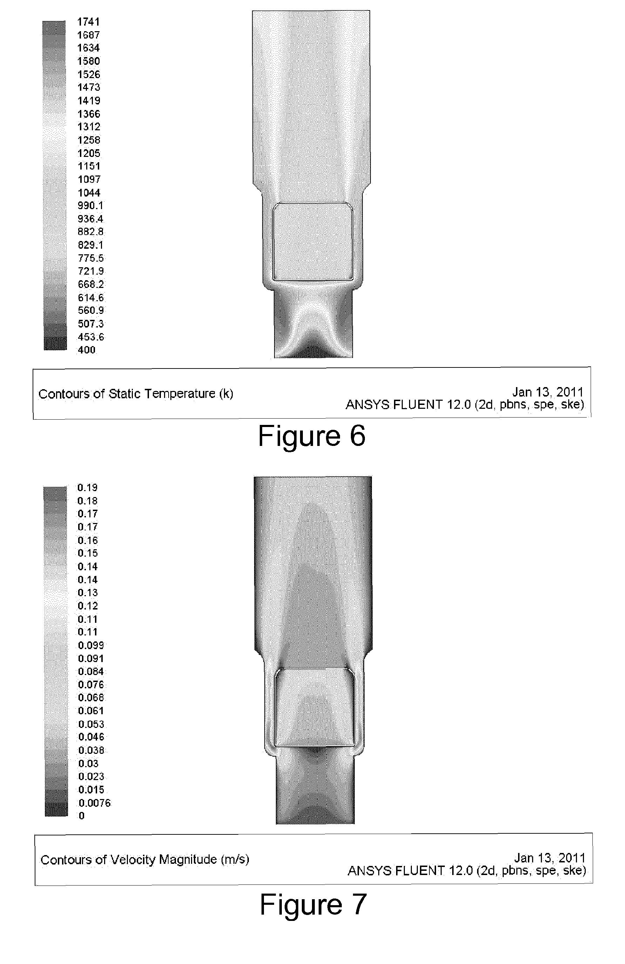

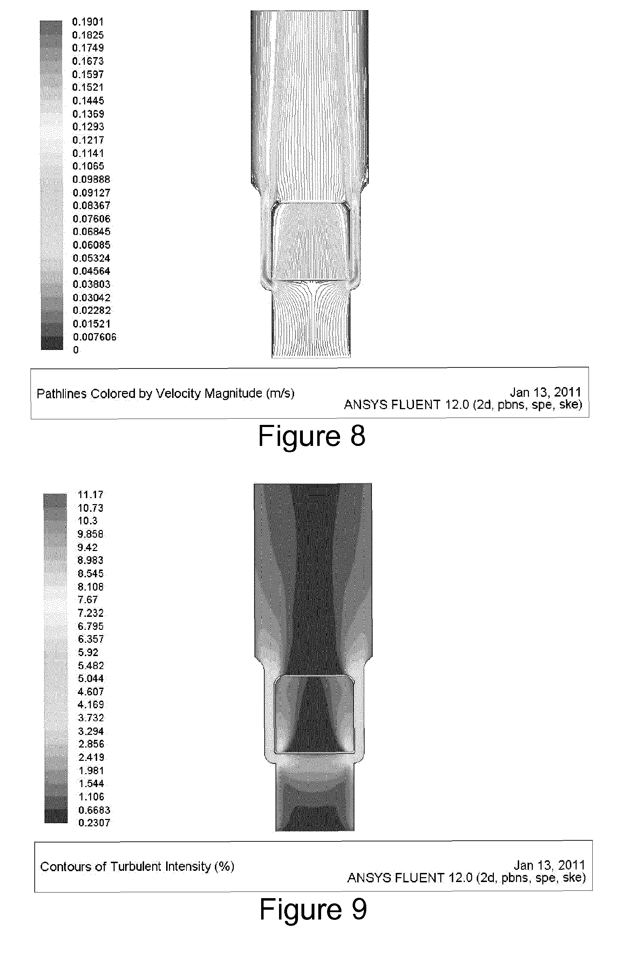

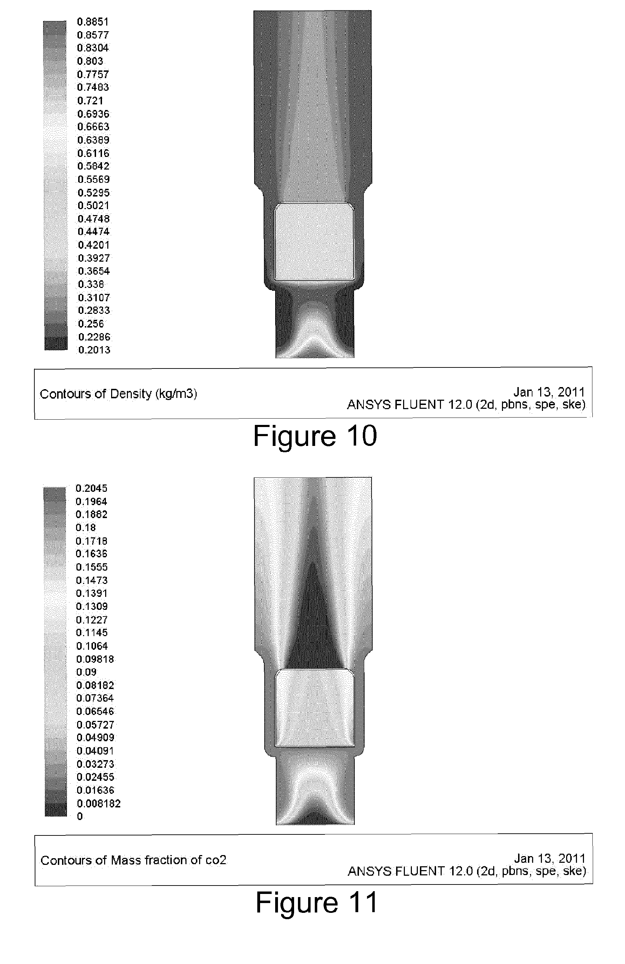

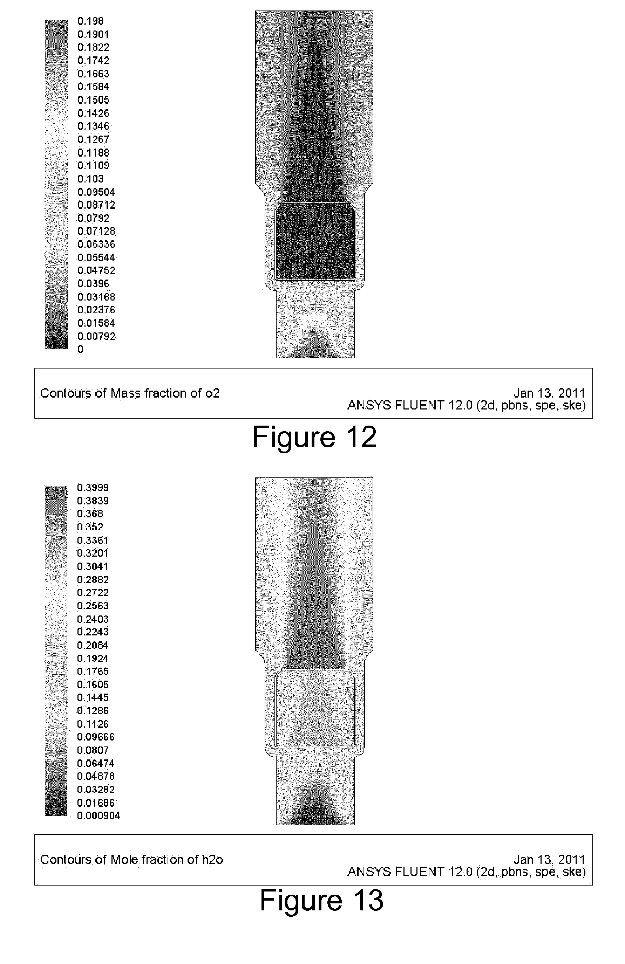

Figures 6 to 13 illustrate the CFD analysis that was carried out to determine the possible path of the exhaust gases through the biomass gasifier of the present invention. To simplify the initial conditions, the upper drying chamber is empty. This does not significantly affect the analysis as the path of the exhaust gases will not be affected. The only affect is the temperature profile of the biomass gasifier. Otherwise the initial conditions and dimensions are taken from the calculations presented herein.

This simple CFD analysis helps to confirm the self-sustainability of the gasifier. Also it confirms all the calculations done.

Further description of the apparatus and method of the present invention now follows.

The biomass gasifier presented herein is a self-sustaining one, which if used continuously, only needs refuelling every 24 hours. It is composed from three chambers, one on top of each other: an upper drying chamber with the primary role of drying the biomass, an intermediate gasification chamber with the role of gasifying the now dry biomass, and a lower combustion chamber with the role of providing the heat for the gasifying process from the intermediate chamber by combusting the solid leftovers from the gasifying process.

The upper chamber has in fact three main roles including drying the wet biomass to a convenient moisture content, cooling the product gases, and storing enough biomass to avoid constant refilling.

The moisture content of the wet biomass is between 0 and 80% w/w, preferably between 40 to 60% w/w, e.g. at least 50% w/w. The moisture content of the biomass can be reduced in the upper chamber by letting the hot exhaust gases from the lower chamber pass through the wet biomass. Additionally the heat from the product gases may be recuperated from this chamber with the help of a heat exchanger which is preferably thermally coupled to the drying chamber.

The intermediate gasification chamber has the role of gasifying the dry biomass released from the upper chamber at a temperature between 100 to 800°C, preferably between 100 to 700°C, more preferably between 400°C to 800°C. The uppermost limit of 800 °C for gasification is particularly important as above this temperature cracking of the product gases within the chamber will be observed. The precise temperature used will, however, depend on the biomass being gasified. The other role of the intermediate chamber is to collect all of the product gases. These collected gases can then be fed into the upper chamber to dry the biomass therein. There is also an inlet from the combustion chamber into the gasification chamber for the hot exhaust gases to flow. The hot exhaust gas regulates the temperature of this chamber, and provide some oxygen to help in the cracking of the tars and the condensable gases produced (that otherwise would condense in the heat exchanger designed to cool the product gases).

The lower combustion chamber has the role of providing the heat for the gasifying process by burning the solid products (char) resulted from the gasification chamber, and to provide the means to clean the ash produced. The burning of the solid products is carried out in the presence of excess air which is introduced into the lower chamber. This excess air is preheated with the help of a heat exchanger in which there are one or both of the hot exhaust gases and the product gases, both coming from the upper chamber (after they have helped in the drying of the wet biomass). By heating the air prior to its introduction into the lower chamber, the efficiency of the combustion will increase along with the overall efficiency of the entire apparatus and method of gasification. The use of the extracted exhaust gas and/or product gas to preheat the excess air for the combustion chamber means that there is little or no wasted energy in the gasifier or method of the present invention. Both the gasifier and the method are therefore self-sustaining.

Basic Thermodynamic Review

A basic thermodynamic review of the biomass gasifier and method of the current invention is now described.

The desired power output, $Q_t$ (kW) is an important input parameter since it can be used to make a preliminary estimation of the amount of fuel to be fed into the gasifier. For example, a normal house requires approximately 2kWh of energy.

As mentioned above, the gasifier of the present invention may be tied to other equipment used for energy generation. For example a diesel engine with a normal efficiency of 20-30% or a stirling engine with a normal efficiency of 40-55%. Thus the gasifier needs to provide enough product and exhaust gases to cover a loss around these efficiency values. Supposing a stirling engine will be used to convert the chemical energy of the produced gases to mechanical energy and then to electrical energy with the help of a generator we can say, (taking account of the efficiency of the precedent listed equipment), that the gasifier needs to provide a desired power output of $Q_t$=4kW. In other words, enough product gases need to be burned in the gasifier to give a thermal power of $Q_t$=4kW.

The product gas of gasification is known to generally be a mixture of several gases including moisture or steam. It also usually contains hydrogen, carbon monoxide, carbon dioxide, methane, other heavier hydrocarbons, nitrogen, moisture and other minor components. The lower calorific value (LCV) of the product gases (when combusted in air) is approximately between 8000 to 15000kJ/kg, with an average value of 3.33 kWh/kg and a density ($\rho_g$) of 0.6 to 0.8 kg/m$^3$. The mass flow ($m_g$) of the gases is: $m_g$=$Q_t$/LCV=1.2kg/h, and the volume flow (Vg) of gases is: $V_g$= mg/ $\rho g$ =1.7m$^3$/h.

The volatile content of dry biomass can be up to approximately 80% w/w, and is typically between 40 to 65% w/w. Approximating the volatile content to 50% w/w, which is equal to the mass of product gases obtained from that quantity of dry biomass, means that for every 1.2kg/h of product gases needed we need 2.4kg/h of dry biomass. Adding the moisture content eliminated in the drying chamber (from approximately 30% to 50% moisture), approximately 3.5kg/h of wet biomass needs to be fed in the equipment.

Thus for the gasifier of the present invention to run continuously for 24 hours, 84kg of wet biomass needs to be present in the upper chamber. This means that the upper chamber must have a volume of at least 0.28m$^3$ (for a density of wet biomass of 300kg/M$^3$).

The rate of production of the product gases can also be controlled such that this rate is the same as the rate at which they are consumed. This is achieved by either regulating the temperature (heat) provided to the intermediate gasification chamber, or by having more biomass in the gasification chamber than is required for continuous operation of the gasifier over a set period of time. It can be assumed that the intermediate chamber receives 2.4kg/h of dry biomass from the upper drying chamber.

To compensate the balance of production/consumption we suppose that in the gasification chamber will be, at any given point, 3kg of dry biomass. This means that the volume of the intermediate chamber will depend on the volume of the fuel, and the volume required for cracking the non-condensable gases (residence volume). The volume of the fuel is approximately 0.015m$^3$, and the residence volume is typically twice the volume of the fuel. Therefore the total volume of the intermediate gasification chamber must be at least 0.05m$^3$.

The solid products (char) which are produced by the gasifying process make up approximately 25 to 45% (by weight) of the total amount of dry biomass. Thus for every 2.4kg/h of dry biomass inserted into the gasification chamber, we get 1.1kg/h of char.

The volume of the lower combustion chamber is approximately equal to the volume of the intermediate gasification chamber since the combustion will take place with excess air. Taking account of the density and quantity of char produced, the volume of the lower chamber must therefore be at least 0.03m$^3$.

The heating value of most chars is approximately between 4000 to 7000kJ/kg. Knowing the specific mass ($C_{pb}$) of the biomass of 1.7kJ/kgK, the heat necessary (Q) to heat the m=3kg of dry biomass in the gasification chamber from 100°C to 700°C is:

$$Q = c_{pb} m (700 - 100) = 3060 \ kJ$$

Thus the gasifier is self-sustaining. That's to say the heat produced by the combusted char is enough to sustain the gasifying process. The fact that the combustion air is preheated means that the available heat in the combustion chamber will increase.

**Basic Thermodynamic Review by Chamber**

A basic thermodynamic review for each of the three chambers within the gasifier and as used in the method is now described.

Energy calculations such as those contained herein are useful for estimating combustion temperatures, and are also needed for the calculation of efficiencies. Energy stored in a fuel is released in the combustion process and will heat the exhaust gas (flue gas) to a certain temperature. This temperature will depend on a number of factors. A general energy balance can be set up:

### *Energy in fuel + Preheat energy = Energy in exhaust gas + Energy losses*

The energy in the fuel is a chemically stored energy released as the fuel is combusted and converted to final products in the exhaust gas. The preheat energy is an energy difference due to a temperature difference between the fuel or air and ambient conditions. The energy in the exhaust gas is the energy stored in the exhaust gas at a certain temperature. This energy will be released as the exhaust gas cools down. Energy losses are losses due to heat loss to the surroundings or due to incomplete combustion (e.g. CO in the exhaust gas, or carbon in the ash).

LOWER COMBUSTION CHAMBER

In the lower combustion chamber the char combusts in the presence of preheated excess air. For every 1 kg of char combusted 4000-7000kJ/kg of heat is produced (depending on the quality of the fuel biomass).

The other main controlling factor of the thermodynamics within this chamber is the heterogeneous combustion/gasification of the char remaining after drying and pyrolysis has occurred. Combustion/gasification of the char, which contains mainly carbon, requires that oxygen or oxidant is transported onto the char surface by diffusion or convection, where it is adsorbed. The oxygen or oxidant then reacts heterogeneously on the surface with carbon; hereafter the product formed in the reaction desorbs, and is carried away from the particle by diffusion or convection. The product is mainly $CO_2$ or CO.

As the final burnout of CO takes place in the gas phase, it is controlled by gas-phase chemical kinetics. The surface reaction is controlled by heterogeneous chemical kinetics, while the other steps are controlled by physical processes. Compared to gas phase combustion, heterogeneous combustion is usually slow. This has major implications for example in entrained flow combustion applications for pulverized fuels. Here it is important to allow for a total residence time in the combustion application that satisfies the time requirements for drying, pyrolysis, heterogeneous combustion and gas phase combustion. Hence, the particle size is preferably small, approximately the size of a nugget (i.e. to the order of centimetres) or less. This particle size is inherently achieved by the operation of the apparatus. Unburned carbon reduces the heat release and therefore the combustion efficiency.

The predominant combustion equation for char (more than 90% carbon) is:

$$C + O_2 => CO_2 \text{ (12 kg C)} + \text{(32 kg O)} => \text{(34 kg } CO_2)$$

From this equation we see that for every 1kg of char combusted in the lower combustion chamber, we need (for a stoichiometric reaction) at least 2.67kg of $O_2$. Thus to ensure that complete combustion will occur, excess air should be introduced in the combustion chamber. Knowing that $O_2$ constitutes 23% of atmospheric air (by mass) and admitting an excess air coefficient $\lambda$=2, the total mass of air ($m_a$) needed for a complete and efficient combustion is: $m_a$[kg]=2.67*$\lambda$*100/23=23.21 kg of air for every 1 kg of char.

For 1.1 kg of char, 25.64kg of excess air is needed for complete combustion. Air has a density of approximately 1.29kg/m$^3$ at 20°C. If the excess air is preheated to 100°C to 200°C, the density of the air can therefore be from 0.9 kg/m$^3$ (at 100°C) to 0.7 kg/m$^3$ (at 200°C). The volume of the 25.64kg of air at a temperature between 100°C to 200°C will be between 28 m$^3$ to 36 m$^3$.

With these values it can be calculated that the speed of the combustion air will be less than 3 m/s (taking account of the volume of the combustion chamber and the volume of necessary air). To reduce this air velocity to a lower value the volume of the combustion chamber may be increased. By doing that, the heat exchanger used for preheating the air will decrease in size. There are therefore two options for reducing the preheated air velocity, either increasing the size of the heat exchanger, or increasing the volume of the combustion chamber.

To preheat the 25.64kg of air ($C_{pair}$=1.01kJ/kgK) from between -10'C and 30°C to between 100°C and 200°C, the maximum power output needed ($Q_{airMAX}$) is:

$$Q_{airMAX} = c_{pair}\ 25.64(200 - (-10)) = 5438\ kJ$$

and the minimum power output ($Q_{airMIN}$) needed is:

$$Q_{airMIN} = c_{pair}\ 25.64(100 - 30) = 1800\ kJ.$$

Knowing that the heating value of most chars is 4000 to 7000kJ/kg, for example 6000 to 7000kJ/kg and approximately 3000kJ must be used to sustain the gasifying process we have 3000 to 4000kJ remaining to preheat the air, help in the drying of the wet biomass and to cover the heat losses through walls and ash. These values again demonstrate that the biomass gasifier of the present invention is self-sustaining.

INTERMEDIATE GASIFICATION CHAMBER

As described above, the total volume of the intermediate gasification chamber must be at least 0.05m$^3$, and at any given point there will be at least 3kg of dry biomass in this chamber (to compensate the balance of production/consumption).

This intermediate chamber will be constructed entirely or partially from materials with a high heat transfer coefficient, including for example, copper and brass. The skilled man will, however, be aware of other materials that would be suitable for use to construct the intermediate chamber.

The inputs into this chamber include dry biomass with a moisture content of between approximately 5 and 10% (to help in the gasifying process) and the heat produced in the lower combustion chamber. Also a small quantity of exhaust gases from the combustion chamber is allowed to go into the gasification chamber. These gases help with the gasifying process by providing the oxygen that is required by some chemical reactions occurring in this chamber.

The output from the gasification chamber includes the hot product gases (around 700°C), hot char and any heat loss through the chamber walls. In this chamber the process of gasifying the dry biomass takes place and also the cracking of the condensable gases and tars into non-condensable gases.

As described previously, gasification involves the following processes:

    a. Pyrolysis (or devolatilization)
    b. Gasification

c. Reversible water gas shift reaction

Pyrolysis occurs as the carbonaceous particles of the material to be gasified heats up. Volatiles are released and char is produced, resulting in for example, up to 70% weight loss for coal. The pyrolysis process is dependent on the properties of the carbonaceous material and determines the structure and composition of the char, which will then undergo gasification reactions. The gasification process occurs as the char reacts with carbon dioxide and steam to produce carbon monoxide and hydrogen, via the following reaction:

$$C+H_2O\rightarrow H_2+CO$$

In addition, the following reversible gas phase water gas shift reaction reaches equilibrium very fast at the temperatures in a gasifier:

$$CO+H_2O\leftrightarrow CO_2+H_2$$

This balances the concentrations of carbon monoxide, steam, carbon dioxide and hydrogen. In essence, a limited amount of oxygen or air is introduced into the reactor (via the exhaust gas) to allow some of the organic material to be "burned" to produce carbon monoxide and energy. These products then drive a second reaction that converts further organic material to hydrogen and additional carbon dioxide. Further reactions occur when the formed carbon monoxide and residual water from the organic material react to form methane and excess carbon dioxide. This third reaction occurs more abundantly in reactors that increase the residence time of the reactive gases and organic materials, as well as heat and pressure.

UPPER DRYING CHAMBER

As described previously, the upper chamber has three roles: drying the wet biomass to convenient moisture content, subsequently cooling the product gases, and storing enough biomass to avoid constant refilling of the gasifier. In embodiments the storage capacity is for 24 hours.

It has been established herein that the total amount of dry biomass that needs to be stored for continual operation of the gasifier for 24 hours is 84kg. Approximately 25kg of this quantity is water that needs to be eliminated. As the specific heat of water is $c_{pw}$=4.18kJ/kgK, the initial temperature of the wet biomass is the same as the temperature of the environment (-10°C to 30°C) and the final temperature must be the boiling point water (100°C), the maximum heat to evaporate the water over the 24 hours ($Q_{wMAX}$) is:

$$Q_{wMAX} = c_{pw}\,25(100-(-10)) = 11495kJ$$

and the minimum heat ($O_{wMIN}$) is:

$$Q_{wMIN} = c_{pw}\,25(100-30) = 7315kJ.$$

Adding the heat of vaporization, which for water is 2261 kJ/kg we get: 68020kJ (max) and 63840kJ (min) respectively. By dividing these values by 24 hours, the amount of heat per hour needed to evaporate the water (from all the wet biomass stored) to a convenient amount is between 2660kJ/h and 2834kJ/h. This amount of heat can be covered by the heat contained by the exhaust gases (3000 to 4000kJ available) and the product gases (2000 to 3000kJ available), whilst ensuring that we also have enough heat left to preheat the air. Thus again demonstrating that the gasifier of the present invention is self-sustaining.

The heat of the product gases is advantageously used to dry the wet biomass. By merging these two processes, an exterior heat exchanger is not required to cool the product gases. Rather the product gases are cooled by the gasifier itself, and optionally reused via the product gas heat exchanger to preheat the excess air for the lower combustion chamber. Consequently the cost of operating the gasifier decreases due to the reused heat of the product gas.

Additionally if a storage solution is not provided, the gasifier would need to be refilled more often, thereby increasing the cost of operation. This is addressed by the drying chamber having a volume of at least 0.28m³ (for a density of wet biomass of 300kg/m³). A drying chamber volume of 0.28m³ can store up to 84kg of wet biomass, thereby enabling the gasifier to run continuously for 24 hours.

The gasifier in embodiments is an envelope with internal chambers. Each of these chambers can be made as an individual modules which can be attached or detached to or from one another. Alternatively the gasifier can be made as one unit, e.g. a can which contains the three connecting chambers. These three chambers whether they are used as individual modules or as part of one unit can all be made from sheets of metal, preferably galvanised steel, except for parts of the intermediate chamber which may be made from a high heat transfer coefficient material such as copper or brass.

As mentioned above, one of the advantages of the gasifier of the present invention is its cost. The gasifier by itself can be a very low-capital-cost device. Its cost depends on the auxiliary equipment required including one or more of:

- fuel storage bins;
- fuel drying, screening and pre-treatment systems;
- devises to deliver and meter fuel fed to the gasifier;
- the gasifier itself;
- ash removal;
- a gas clean-up system;
- gasifier operational controls.

No doubt many other effective alternatives will occur to the skilled person. It will be understood that the invention is not limited to the described embodiments and encompasses modifications apparent to those skilled in the art lying within the spirit and scope of the claims appended hereto.

**Claims**

1. A biomass gasifier, comprising three connected chambers, an upper biomass drying chamber, a lower biomass combustion chamber, and an intermediate biomass gasification chamber, the gasifier further comprising:

   a system to release dry biomass from said drying chamber into said gasification chamber;
   a system to release gasified biomass from said gasification chamber into said combustion chamber;
   a product gas outlet coupled to said gasification chamber to provide product gas from gasifying said biomass; and exhaust gas communication means to communicate exhaust gas from said combustion chamber to first said gasification chamber and then said drying chamber.

2. A biomass gasifier as claimed in claim 1 wherein said exhaust gas communication means comprises a first plurality of ducts between said combustion chamber and said gasification chamber, and a second plurality of ducts between said gasification chamber and said drying chamber.

3. A biomass gasifier as claimed in claim 2 wherein a said duct is configured to convey said exhaust generally vertically, and wherein openings at either end of a said duct are laterally offset from one another to inhibit material from falling through the duct.

4. A biomass gasifier as claimed in claim 3 wherein a said system to release dry/gasified biomass comprises a system to align said openings at either end of a said duct.

5. A biomass gasifier as claimed in claim 2, 3 or 4 wherein said first plurality of ducts runs across a partition between said combustion and gasification chambers, and wherein said second plurality of ducts runs across a partition between said gasification and drying chambers.

6. A biomass gasifier as claimed in any preceding claim wherein said exhaust gas communication means includes at least one exhaust gas duct external to said chambers.

7. A biomass gasifier as claimed in any preceding claim wherein said product gas outlet is coupled to said gasification chamber via a product gas heat exchanger thermally coupled to said drying chamber.

8. A biomass gasifier as claimed in claim 7 wherein said product gas outlet is coupled to a product gas manifold above said gasification chamber, and wherein said product gas manifold is coupled to said product gas heat exchanger which comprises a plurality of gas channels running through or adjacent to said drying chamber between said gasification chamber and said manifold.

9. A biomass gasifier as claimed in any preceding claim, wherein said combustion chamber has an air inlet, the gasifier further comprising an air inlet heat exchanger to preheat air for said air inlet, and wherein one or both of said product gas and said exhaust gas flow through said air inlet heat exchanger to preheat air for said combustion chamber.

10. A biomass gasifier as claimed in any preceding claim further comprising an ash removal system driven by operation of said gasifier.

11. A biomass gasifier as claimed in any one of claims 1 to 10 wherein said chambers comprise partitions within a single outer envelope.

12. A method of gasifying biomass using a gasifier comprising three connected chambers, an upper biomass drying chamber, a lower biomass combustion chamber, and an intermediate biomass gasification chamber, the gasifier further comprising a product gas outlet coupled to said gasification chamber and an exhaust gas communication means to communicate exhaust gas from said combustion chamber to first said gasification chamber and then said drying chamber, the method comprising:

drying wet biomass in the drying chamber with at least the product gas provided by the product gas outlet;
allowing the dry biomass to pass from said drying chamber into said gasification chamber;
gasifying the dry biomass in the gasification chamber with the exhaust gas from said combustion chamber; and
allowing the gasified biomass to pass from said gasification chamber into said combustion chamber.

13. A method as claimed in claim 12 further comprising combusting the gasified biomass released into said combustion chamber so as to produce said exhaust gas and ash, wherein the method further comprises automatically removing the ash from said combustion chamber using an ash removal system driven by operation of said gasifier.

14. A method as claimed in claim 12 or 13 wherein drying of the wet biomass uses heat from the product gas, and wherein the method is self-sustaining; in particular wherein the wet biomass present in the drying chamber contains greater than 50% w/w water.

15. A gasifier comprising three connected chambers, an upper biomass drying chamber, a lower biomass combustion chamber, and an intermediate biomass gasification chamber, the gasifier further comprising a product gas outlet coupled to said gasification chamber and an exhaust gas communication means to communicate exhaust gas from said combustion chamber to first said gasification chamber and then said drying chamber, wherein the gasifier further comprises:

means for drying wet biomass in the drying chamber with at least the product gas provided by the product gas outlet;
means for allowing the dry biomass to pass from said drying chamber into said gasification chamber;
means for gasifying the dry biomass in the gasification chamber with the exhaust gas from said combustion chamber; and
means for allowing the gasified biomass to pass from said gasification chamber into said combustion chamber.

Figure 1

EXHAUST
GAS

EXHAUST
GAS

PRODUCT
GAS
OUTPUT

113

EXHAUST
GAS

109

114

AIR INLET

0.28m³ dryer chamber

107

112

101

104

108c

0.05m³ pyrolsis
chamber
102

108b

108

105

108a

0.03m³ combustion
chamber 103

200

Figure 2

Figure 3

Figure 4

Figure 5

| | |
|---|---|
| 1741 | |
| 1687 | |
| 1634 | |
| 1580 | |
| 1526 | |
| 1473 | |
| 1419 | |
| 1366 | |
| 1312 | |
| 1258 | |
| 1205 | |
| 1151 | |
| 1097 | |
| 1044 | |
| 990.1 | |
| 936.4 | |
| 882.8 | |
| 829.1 | |
| 775.5 | |
| 721.9 | |
| 668.2 | |
| 614.6 | |
| 560.9 | |
| 507.3 | |
| 453.6 | |
| 400 | |

Contours of Static Temperature (k)                    Jan 13, 2011
                                ANSYS FLUENT 12.0 (2d, pbns, spe, ske)

## Figure 6

0.19
0.18
0.17
0.17
0.16
0.15
0.14
0.14
0.13
0.12
0.11
0.11
0.099
0.091
0.084
0.076
0.068
0.061
0.053
0.046
0.038
0.03
0.023
0.015
0.0076
0

Contours of Velocity Magnitude (m/s)                    Jan 13, 2011
                                ANSYS FLUENT 12.0 (2d, pbns, spe, ske)

## Figure 7

| 0.1901 |
| 0.1825 |
| 0.1749 |
| 0.1673 |
| 0.1597 |
| 0.1521 |
| 0.1445 |
| 0.1369 |
| 0.1293 |
| 0.1217 |
| 0.1141 |
| 0.1065 |
| 0.09888 |
| 0.09127 |
| 0.08367 |
| 0.07606 |
| 0.06845 |
| 0.06085 |
| 0.05324 |
| 0.04564 |
| 0.03803 |
| 0.03042 |
| 0.02282 |
| 0.01521 |
| 0.007606 |
| 0 |

Pathlines Colored by Velocity Magnitude (m/s)                Jan 13, 2011
                                    ANSYS FLUENT 12.0 (2d, pbns, spe, ske)

## Figure 8

| 11.17 |
| 10.73 |
| 10.3 |
| 9.858 |
| 9.42 |
| 8.983 |
| 8.545 |
| 8.108 |
| 7.67 |
| 7.232 |
| 6.795 |
| 6.357 |
| 5.92 |
| 5.482 |
| 5.044 |
| 4.607 |
| 4.169 |
| 3.732 |
| 3.294 |
| 2.856 |
| 2.419 |
| 1.981 |
| 1.544 |
| 1.106 |
| 0.6683 |
| 0.2307 |

Contours of Turbulent Intensity (%)                         Jan 13, 2011
                                    ANSYS FLUENT 12.0 (2d, pbns, spe, ske)

## Figure 9

| |
|---|
| 0.8851 |
| 0.8577 |
| 0.8304 |
| 0.803 |
| 0.7757 |
| 0.7483 |
| 0.721 |
| 0.6936 |
| 0.6663 |
| 0.6389 |
| 0.6116 |
| 0.5842 |
| 0.5569 |
| 0.5295 |
| 0.5021 |
| 0.4748 |
| 0.4474 |
| 0.4201 |
| 0.3927 |
| 0.3654 |
| 0.338 |
| 0.3107 |
| 0.2833 |
| 0.256 |
| 0.2286 |
| 0.2013 |

Contours of Density (kg/m3)

Jan 13, 2011
ANSYS FLUENT 12.0 (2d, pbns, spe, ske)

# Figure 10

| |
|---|
| 0.2045 |
| 0.1964 |
| 0.1882 |
| 0.18 |
| 0.1718 |
| 0.1636 |
| 0.1555 |
| 0.1473 |
| 0.1391 |
| 0.1309 |
| 0.1227 |
| 0.1145 |
| 0.1064 |
| 0.09818 |
| 0.09 |
| 0.08182 |
| 0.07364 |
| 0.06546 |
| 0.05727 |
| 0.04909 |
| 0.04091 |
| 0.03273 |
| 0.02455 |
| 0.01636 |
| 0.008182 |
| 0 |

Contours of Mass fraction of co2

Jan 13, 2011
ANSYS FLUENT 12.0 (2d, pbns, spe, ske)

# Figure 11

0.198
0.1901
0.1822
0.1742
0.1663
0.1584
0.1505
0.1426
0.1346
0.1267
0.1188
0.1109
0.103
0.09504
0.08712
0.0792
0.07128
0.06336
0.05544
0.04752
0.0396
0.03168
0.02376
0.01584
0.00792
0

Contours of Mass fraction of o2

Jan 13, 2011
ANSYS FLUENT 12.0 (2d, pbns, spe, ske)

# Figure 12

0.3999
0.3839
0.368
0.352
0.3361
0.3201
0.3041
0.2882
0.2722
0.2563
0.2403
0.2243
0.2084
0.1924
0.1765
0.1605
0.1445
0.1286
0.1126
0.09666
0.0807
0.06474
0.04878
0.03282
0.01686
0.000904

Contours of Mole fraction of h2o

Jan 13, 2011
ANSYS FLUENT 12.0 (2d, pbns, spe, ske)

# Figure 13